# EUROPÄISCHE PATENTSCHRIFT

(11) **EP 3 503 755 B1**
(45) Veröffentlichungstag und Bekanntmachung des Hinweises auf die Patenterteilung: **14.10.2020**
(21) Anmeldenummer: 17755518.2
(22) Anmeldetag: 23.08.2017
(51) Int. Cl.: A42B 3/30, A42B 3/04

(54) **SCHUTZHELM MIT EINER ANTENNE**
PROTECTIVE HELMET WITH AN ANTENNA
CASQUE DE PROTECTION MUNI D'UNE ANTENNE

(30) Priorität: 26.08.2016 DE 102016115889
(43) Veröffentlichungstag der Anmeldung: 03.07.2019
(73) Patentinhaber: Schuberth GmbH, 39126 Magdeburg (DE)
(72) Erfinder: BECKER, Jan-Christian, 39167 Niederndodeleben (DE); SCHULZ, Thomas, 38154 Koenigslutter am Elm (DE); DITTMER-PETERS, Christian, 38154 Koenigslutter (DE); MOEBIUS, Markus, 39221 Welsleben (DE); HAGEMEIER, Thomas, 39126 Magdeburg (DE)
(74) Vertreter: Patentanwälte Bauer Vorberg Kayser
(86) Internationale Anmeldenummer: PCT/EP2017/071259
(87) Internationale Veröffentlichungsnummer: WO 2018/037055

(56) Entgegenhaltungen:
- WO-A1-2012/148519
- DE-A1- 3 042 159
- DE-U1-202011 051 831
- US-A- 3 977 003

## Beschreibung

Die Erfindung betrifft einen Schutzhelm mit einer Antenne.

Das Tragen eines Schutzhelms Ist bei vielen Tätigkeiten vorgeschrieben, u.a. regelmäßig beim Fahren auf einem Motorrad. Nicht nur ein solcher Schutzhelm mit seiner sicherheitsbedingten und weitreichenden Abdeckung des Kopfes des Fahrers, sondern auch der durch den Motor des Motorrads und die Fahrtgeräusche entstehende Lärm macht die unverstärkte mündliche Kommunikation von Motorradfahrern während der Fahrt praktisch schwierig oder unmöglich.

Im Zuge neuerer technischer Entwicklungen ermöglichen drahtlose Funkverbindungen zwischen den Motorradfahrern sowie entsprechende Anordnungen von Mikrofonen und Kopfhörern die Kommunikation von Motorradfahrern untereinander auch in einer größeren Gruppe und während der Fahrt. Speziell hat sich das Bluetooth-Protokoll als geeignete Grundlage zum Bilden von Kommunikationsnetzwerken innerhalb einer jeweiligen Gruppe von Motorradfahrern erwiesen. Ein potenzieller Nachteil stellt dabei die maximal mögliche Entfernung zwischen den Kommunikationsteilnehmern dar. Die Entfernung zwischen den einzelnen Motorradfahrern innerhalb einer Gruppe kann während einer Fahrt stark variieren. Hinzu kommt, dass bei vielen Bluetooth-Modulen zur Anordnung an einem Motorradhelm die Antenne so dimensioniert oder positioniert ist, dass die erreichbare Reichweite unterhalb der an sich möglichen Werte bleibt.

In diesem Zusammenhang schlägt die WO 2012/148519 A1 aus dem Stand der Technik einen Schutzhelm mit einer integrierten Antenne vor. Speziell soll dabei die integrierte Antenne In der Innenschicht aufgenommen sein, welche Innenschicht von der Außenschale umgeben ist und auftretende Aufprallkräfte dämpfen soll. Durch diese Anordnung soll es möglich werden, eine Antenne ohne enge Beschränkungen ihrer Länge mit einem Schutzhelm zu verwenden.

Allerdings ist die Anordnung der Antenne In der Innenschicht und damit innen zu der Außenschale einerseits nachteilig hinsichtlich der Abstrahlung der Antenne auf den Träger des Helms. Im selben Zusammenhang steht, dass durch die Außenschale auch eine Dämpfung der Antennenstrahlung auf dem Weg zu den anderen Kommunikationsteilnehmern entsteht, was u.a. die mögliche Reichweite der Antenne einschränken kann.

Die US 3,977,003 aus dem Stand der Technik offenbart eine Antenne, welche sich an die Oberfläche eines nichtmetallischen Helms für die Kommunikation von unterwegs anpasst. Ein am Helm montiertes metallisches Elektronikgehäuse und Antennenfinger bilden die Struktur zum Aussenden von Strahlen, welche über ein breites Frequenzband ohne Frequenzeinstellung betrieben werden kann.

Die DE 30 42 159 A1 aus dem Stand der Technik, von welcher die vorliegende Erfindung ausgeht, beschreibt einen Schutzhelm mit einem Lautsprecher, einem Mikrophon und einer Bedieneinheit, die an ein Funkgerät angeschlossen sind und bei dem das Funkgerät mit Versorgungseinheit, Antenne oder dergleichen In den Schutzhelm integriert Ist.

Ausgehend von diesem Stand der Technik besteht die Aufgabe der Erfindung darin, den aus dem Stand der Technik bekannten Schutzhelm mit einer Antenne so weiterzuentwickeln und zu verbessern, dass sich günstigere Abstrahlungseigenschaften sowohl bezüglich des Trägers des Schutzhelms als auch bezüglich der Kommunikationspartner der Antenne ergeben.

Bezogen auf einen Schutzheim mit Antenne mit den Merkmalen des Oberbegriffs von Anspruch 1 wird diese Aufgabe durch die Merkmale des kennzeichnenden Teils von Anspruch 1 gelöst.

Wesentlich für die Erfindung ist die Erkenntnis, dass eine Platzierung der Antenne derart, dass zumindest ein Teil der Außenschale zwischen der Antenne und der Innenschicht angeordnet ist, für die Abstrahlung der Antenne vorteilhaft ist. Die für die Übertragung durch die Antenne an sich störende Außenschale schirmt auf diese Weise tendenziell den Träger des Schutzhelms bzw. seinen Kopf vor der Abstrahlung ab. Umgekehrt stört die Außenschale die ja eigentlich beabsichtigte Übertragung an die anderen Kommunikationsteilnehmer nicht oder nur in geringerem Maße. Hinzu kommt, dass obgleich die modernen Antennen recht klein und leicht ausgestaltet sind, nichtsdestotrotz die Anordnung eines solchen Bauteils außerhalb der Außenschale aus grundsätzlichen Erwägungen auch unter dem mechanischen Sicherheitsaspekt vorteilhaft ist.

Der erfindungsgemäße Schutzhelm, bei dem es sich insbesondere um einen Motorradschutzheim handeln kann, weist eine Antenne zur Funkübertragung, eine Außenschale zur Verteilung von Aufprallkräften und eine von der Außenschale aufgenommene Innenschicht zur Dämpfung von Aufprallkräften auf. Folglich ist die Innenschicht innerhalb der Außenschale angeordnet und besteht regelmäßig aus einem weicheren Material als die Außenschale. Sowohl die Außenschale als auch die Innenschicht können aus mehreren Schichten oder Lagen bestehen, wobei wesentlich für die jeweilige Zuordnung zur Außenschale oder zur Innenschicht ist, ob die betreffende Schicht oder Lage der Verteilung oder der Dämpfung von Aufprallkräften dient.

Der erfindungsgemäße Schutzhelm weist ferner einen mit der Außenschale fest verbundenen Steckplatz zur Kontaktierung einer Digitalvorrichtung auf, welche Digitalvorrichtung zur drahtlosen Kommunikation eingerichtet ist. Vorzugsweise weist die Digitalvorrichtung elektronische Logikbauteile zur Implementierung eines Drahtloskommunikationsprotokolls auf. Die Verbindung des Steckplatzes mit der Außenschale kann dabei unmittelbar sein, sie kann aber auch mittelbar über dazwischen angeordnete Bauteile erfolgen. Bei dem erfindungsgemäßen Schutzhelm verbindet der Steckplatz bei Kontaktierung der Digitalvorrichtung diese - also die Digitalvorrichtung - elektrisch mit der Antenne für die drahtlose Kommunikation. Auf diese Weise kann die Digitalvorrichtung die Antenne für die drahtlose Kommunikation einsetzen. Der Schutzhelm kann noch weitere Antennen aufweisen. Diese können dann ebenfalls bei Kontaktierung der Digitalvorrichtung mit der Digitalvorrichtung vorzugsweise separat elektrisch verbunden werden. Denkbar ist auch, dass dann weitere Steckplätze für diese weiteren Antennen vorgesehen sind.

Der erfindungsgemäße Schutzhelm ist dadurch gekennzeichnet, dass zwischen der Antenne und der Innenschicht zumindest eine Teilschicht der Außenschale angeordnet ist. Dies bedeutet, dass zwischen jedem Abschnitt der Antenne entlang der im Wesentlichen gesamten Länge der Antenne und der Innenschicht zumindest ein Teil der Außenschale angeordnet ist. Mit anderen Worten gibt es keinen Abschnitt der Antenne, welcher - ohne dazwischenliegenden Teil der Außenschale - direkt an die Innenschicht grenzt. Auf diese Weise wird die Außenschale zumindest teilweise zur Dämpfung der an den Träger des Schutzhelms angegeben Strahlung eingesetzt, wobei im selben Maße die Dämpfung gegenüber einer Übertragung an die anderen Kommunikationsteilnehmer vermieden wird. Als Antenne im vorliegenden Sinne wird diejenige Struktur verstanden, welche im bestimmungsgemäßen Gebrauch für das Ausstrahlen und für den Empfang entsprechender Signale eingerichtet sind. Elektrische Zuleitungen, welche demgegenüber ggf. eine wesentlich kleinere und parasitäre Abstrahl- und Empfangswirkung aufweisen, zählen folglich nicht zu der Antenne in diesem Sinne.

Gemäß einer bevorzugten Ausführungsform des Schutzhelms ist vorgesehen, dass die Antenne außerhalb der Außenschale angeordnet ist. Es wäre dann nicht nur eine Teilschicht der Außenschale zwischen der Antenne und der Innenschicht angeordnet, sondern es wären alle Schichten der Außenschale und damit die Außenschale Insgesamt zwischen der Antenne und der Innenschicht angeordnet. Weiter Ist es bevorzugt, dass die Antenne im Wesentlichen zur Abstrahlung in einer horizontalen Senderichtung eingerichtet ist. Dabei ist die relative Senderichtung der Antenne regelmäßig durch ihre Bauart und Geometrie bestimmt. Die Richtungsangabe "horizontal" bezieht sich dabei auf den Schutzhelm Im von einer Person getragenen Zustand.

Es kann aber auch sein, dass die Antenne von der Außenschale umgeben ist. Dies kann insbesondere dann der Fall sein, wenn die Außenschale eine Vielzahl von Außenschalschichten aufweist und die Antenne zwischen den Außenschalschichten angeordnet ist.

Grundsätzlich können die Antenne und die Digitalvorrichtung für eine beliebige Art der digitalen drahtlosen Kommunikation genutzt werden. Eine bevorzugte Ausführungsform des Schutzhelms ist jedoch dadurch gekennzeichnet, dass die Digitalvorrichtung ein Funkmodul für ein Wireless Personal Area Network (WPAN) ist. Hier kann es insbesondere sein, dass die Digitalvorrichtung ein Funkmodul für Bluetooth ist.

Eine weitere bevorzugte Ausführungsform des Schutzhelms Ist dadurch gekennzeichnet, dass der Steckplatz einen Rahmen zur Aufnahme der Digitalvorrichtung und eine mit der Antenne elektrisch verbundene Übertragungsvorrichtung zur Signalübertragung aufweist und dass bei Aufnahme der Digitalvorrichtung In dem Rahmen die Übertragungsvorrichtung mit einem Antennenpol der Digitalvorrichtung elektrisch gekoppelt wird. Grundsätzlich kann diese Übertragungsvorrichtung auch eine berührungslose elektrische Kopplung, z. B. eine induktive elektrische Kopplung, mit dem Antennenpol herstellen. Bevorzugt Ist jedoch, dass es sich bei der Übertragungsvorrichtung um eine Kontaktvorrichtung handelt und dass bei Aufnahme der Digitalvorrichtung in dem Rahmen die Kontaktvorrichtung den Antennenpol, bei dem es sich vorzugsweise um einen Antennenkontakt handelt, elektrisch kontaktiert. Entsprechend entsteht eine Berührung zwischen der Kontaktvorrichtung und dem Antennenkontakt.

Es wird also durch den Steckplatz bzw. durch seinen Rahmen die Digitalvorrichtung auch mechanisch aufgenommen. Vorzugsweise Ist der Rahmen zur Befestigung der Digitalvorrichtung an der Außenschale bei Aufnahme der Digitalvorrichtung eingerichtet. Dabei kann der Steckplatz auch ein Arretierungsmittel zum Halten der Digitalvorrichtung in dem Steckplatz aufweisen. Auf diese Weise kann nicht nur eine sichere Befestigung der Digitalvorrlchtung an dem Schutzhelm sondern auch ein zuverlässiger elektrischer Kontakt der Digitalvorrichtung zu der Antenne gewährleistet werden.

Gemäß einer bevorzugten Ausführungsform des Schutzhelms Ist vorgesehen, dass die Antenne eine Dipolantenne Ist. Es kann entsprechend sein, dass die Übertragungsvorrichtung und speziell die Kontaktvorrichtung eine Koaxialsteckvorrichtung mit mindestens zwei Kontaktpolen ist. Dann kann es sein, dass die Digitalvorrichtung einen Antennenkontakt aufweist, welcher ein Koaxialkontakt ist und mindestens zwei Koaxialkontakte aufweist.

Eine bevorzugte Ausführungsform des Schutzhelms ist dadurch gekennzeichnet, dass die Antenne bezogen auf eine Querrichtung des Schutzhelms Im Wesentlichen an einem äußeren Querende des Schutzhelms angeordnet ist. Der Begriff "Querrichtung" ist hier und nachfolgend bezogen auf eine Längsrichtung des Schutzhelms zu verstehen, welche Längsrichtung der - geraden - Blickrichtung einer den Schutzhelm tragenden Person entspricht. Die Querrichtung ist also eine im obigen Sinne horizontale Richtung, welche zudem Im Wesentlichen senkrecht zu der Längsrichtung verläuft. Eine solche Platzierung der Antenne hat sich als für die Abstrahlung als besonders geeignet erwiesen.

Gemäß der Erfindung weist der Schutzhelm eine Übertragungsleitung zur elektrischen Verbindung der Digitalvorrichtung mit der Antenne aufweist. Da dieser Übertragungsleitung keine wesentliche Rolle für das Aussenden oder das Empfangen von Signalen zukommt, zählt sie nicht selbst zu der Antenne Im hier gegenständlichen Sinne. Die Übertragungsleitung ist zumindest teilweise Innenseitig zu der Außenschale geführt. Bevorzugt ist ebenso, dass die Übertragungsleitung vollständig innenseitig zu der Außenschale geführt ist. Es könnte die Übertragungsleitung also auch - ganz oder teilweise - zwischen der Außenschale insgesamt und der Innenschicht angeordnet sein. Anders ausgedrückt könnte die Übertragungsleitung zumindest abschnittsweise zwischen der Außenschale und der Innenschicht geführt sein.

Bei einer Anordnung der Übertragungsleitung innenseitig zu der Außenschale Ist diese dennoch mit der Antenne zu kontaktieren, wobei dann zumindest die Teilschicht der Außenschale auf eine grundsätzlich beliebige Art und Weise zu queren wäre. Hier sieht eine bevorzugte Ausführungsform des Schutzhelms vor, dass die Außenschale eine Öffnung aufweist und dass die Übertragungsleitung für die elektrische Verbindung durch die Öffnung geführt ist.

Gemäß einer bevorzugten Ausführungsform des Schutzhelms Ist vorgesehen, dass die Öffnung In einer unteren Hälfte der Außenschale angeordnet ist. Auch hier Ist die Richtungsangabe "unten" auf eine Ausrichtung des Schutzhelms beim Tragen durch eine Person bezogen. Auf diese Welse kann die Übertragungsleitung bei einer günstigen Positionierung der Antenne vergleichsweise kurz ausgeführt werden.

Gemäß der Erfindung ist der Steckplatz an einem unteren Rand des Schutzhelms angeordnet. Weiter kann es sein, dass der Steckplatz seitlich versetzt zu einer vertikalen Mittelebene in Längsrichtung des Schutzhelms angeordnet ist. Auch die Richtungsangabe "vertikal" bezieht sich hier und nachfolgend auf die Ausrichtung des Schutzhelms beim Tragen durch eine Person. Anders ausgedrückt ist der Steckplatz nicht in Querrichtung mittig, sondern vielmehr versetzt angeordnet. Dies erleichtert die Bedienung der Digitalvorrichtung durch an der Digitalvorrichtung angeordnete Bedienelemente wie z. B. Druckknöpfe. In diesem Zusammenhang ist es weiter bevorzugt, dass die obige Öffnung auf derselben Seitenhälfte der Außenschale wie der Steckplatz angeordnet Ist.

Eine bevorzugte Ausführungsform des Schutzhelms ist dadurch gekennzeichnet, dass der Schutzhelm eine auf der Außenschale angeordnete Abdeckung aufweist und dass die Antenne zumindest teilweise zwischen der Außenschale und der Abdeckung angeordnet ist. Vorzugsweise kann die Antenne auch vollständig zwischen der Außenschale und der Abdeckung angeordnet sein. Auf diese Welse ist die Antenne vor Beschädigungen durch mechanische Einwirkungen von außen besser geschützt. Vorzugsweise umfasst die Abdeckung Kunststoff oder besteht aus Kunststoff. Da der Abdeckung regelmäßig keine Schutzwirkung mit so hohen Anforderungen wie bei der Außenschale zukommt, ist ebenso regelmäßig der Einfluss auf die Abstrahlung der Antenne wesentlich geringer.

Eine weitere bevorzugte Ausführungsform des Schutzhelms ist dadurch gekennzeichnet, dass der Schutzhelm ein Visier zum Augenschutz und eine fest mit der Außenschale verbundene Visierbefestigung zur schwenkbaren Lagerung des Visiers aufweist. Ein solches Visier und eine solche Visierbefestigung sind an sich aus dem Stand der Technik bekannt. Hier ist vorzugsweise vorgesehen, dass die Abdeckung an die Visierbefestigung angrenzend angeordnet ist. Dies erlaubt verschiedene vorteilhafte Synergien zwischen der Abdeckung und der Visierbefestigung, welche untenstehend näher ausgeführt werden. Diese vorteilhaften Synergien ergeben sich Insbesondere dann, wenn die Abdeckung Im Wesentlichen entgegen einer Sichtrichtung des Schutzhelms zu der Visierbefestigung versetzt angeordnet ist. Diese Sichtrichtung ist dabei entlang der Längsrichtung orientiert und In die Blickrichtung einer den Schutzhelm tragenden Person ausgerichtet.

Gemäß einer bevorzugten Ausführungsform des Schutzhelms ist vorgesehen, dass die Abdeckung an der Visierbefestigung befestigt ist. Da die Visierbefestigung ohnehin eine sichere Befestigung des Visiers an der Außenschale gewährleisten muss, kann diese Befestigungswirkung der Visierbefestigung durch die Abdeckung mitbenutzt werden, ohne dass es eines separaten Eingriffs mit der Außenschale bedarf, für welchen Eingriff regelmäßig eine Schwächung der Außenschale durch Bohrungen o.dgl. erforderlich Ist. Weiter kann es sein, dass die Öffnung unter der Visierbefestigung angeordnet Ist, wobei dann insbesondere die Visierbefestigung eine mit der Öffnung fluchtende Durchbrechung zum Führen der Übertragungsleitung durch die Öffnung aufweisen kann. Auf diese Welse kann die für die Durchführung der Übertragungsleitung erforderliche Bearbeitung der Außenschale auf den ohnehin gesondert zu gestaltenden Bereich der Visierbefestigung begrenzt werden.

Gemäß einer weiteren bevorzugten Ausführungsform des Schutzhelms Ist vorgesehen, dass die Abdeckung eine - vorzugsweise einstückig ausgebildete - Aerodynamikvorrichtung zum Beeinflussen der Luftströmung um den Schutzhelm bei Fahrt Ist. Auf diese Weise hat die Abdeckung nicht nur die Funktion, die Antenne vor mechanischer Einwirkung von außen zu schützen, sondern sie beeinflusst auch das aerodynamische Verhalten des Schutzhelms vorteilhaft. Bevorzugt Ist es hier, dass die Abdeckung Turbulatoren zum Erzeugen von Luftverwirbelungen bei Fahrt aufweist. Bei diesen Turbulatoren kann es sich um Auswölbungen der Abdeckung handeln, welche länglich ausgebildet sind und sich im Wesentlichen in Längsrichtung erstrecken. Solche Turbulatoren sind in an sich aus dem Stand der Technik bekannter Weise dazu eingerichtet, eine laminare Luftströmung, welche vorliegend durch die Fahrtluft bei Fahrt entsteht, in eine turbulente Luftströmung zu überführen. Bei einem Schutzhelm dienen sie der Minimierung der durch die Fahrtluft entstehenden Störgeräusche.

Eine bevorzugte Ausführungsform des Schutzhelms Ist dadurch gekennzeichnet, dass der Schutzhelm eine an der Außenschale angeordnete Struktur aufweist, welche Struktur gegenüber der Außenschale zu einem konturierten Oberflächenverlauf des Schutzhelms führt und dass die Aerodynamikvorrichtung so benachbart zu der Struktur angeordnet ist, dass der durch die Aerodynamikvorrichtung resultierende Oberflächenverlauf gegenüber dem konturierten Oberflächenverlauf geglättet ist. Die Struktur ist folglich nicht Bestandteil der Außenschale. Grundsätzlich sind aus aerodynamischen Gründen Insbesondere schroff aus der Oberfläche des Schutzhelms hervorstehende Konturen o.dgl. bei einem Schutzhelm zu vermeiden. In bestimmten Bereichen, z. B. Im Bereich der Visierbefestigung, sind solche Strukturen nicht gänzlich zu vermelden. Grundsätzlich ließe sich auch die Außenschale so formen, dass sie die aus einer solchen Struktur entstehenden Ungleichmäßigkeiten kompensiert. Fertigungstechnisch einfacher Ist es jedoch regelmäßig, wenn dies durch die Aerodynamikvorrichtung geschieht. Vorzugsweise handelt es sich bei dieser Struktur um das Visier oder um die Visierbefestlgung.

Eine weitere bevorzugte Ausführungsform des Schutzhelms Ist dadurch gekennzeichnet, dass die Außenschale - vorzugsweise In einem Deckenbereich des Schutzhelms angeordnete - Belüftungsöffnungen zur Zufuhr von Fahrtluft zur Kühlung in den Schutzhelm aufweist und dass die Abdeckung eine die Belüftungsöffnungen abdeckende Zuführvorrichtung zum Umlenken der Fahrtluft ist. Der Deckenbereich entspricht dabei der oberen Hälfte des Schutzhelms - wiederum bezogen auf eine Ausrichtung beim Tragen des Schutzhelms durch eine Person - und vorzugsweise den oberhalb eines Kopfes einer den Schutzhelm tragenden Person befindlichen Bereich des Schutzhelms bzw. der Außenschale. Es Ist an sich aus dem Stand der Technik bekannt, Belüftungsöffnungen In diesem Bereich bei Schutzhelmen vorzusehen. Hier wird vorgeschlagen, die ebenfalls regelmäßig vorgesehene Zuführvorrichtung, welche dazu eingerichtet ist, Fahrtluft speziell durch die Belüftungsöffnungen umzulenken, auch zur Abdeckung der Antenne einzusetzen. Bevorzugt Ist es, dass die Zuführvorrichtung zur variablen Zufuhr von Fahrtluft verstellbar ist, sodass also die Menge an zu den Belüftungsöffnungen zugeführter Fahrtluft variabel ist.

Weitere vorteilhafte und bevorzugte Ausgestaltungen ergeben sich aus der nachfolgenden Beschreibung mit Bezug auf die Figuren. In der lediglich ein Ausführungsbeispiele wiedergebenden Zeichnung zeigt
- Fig. 1: eine schematische Seitenansicht eines ersten Ausführungsbeisplels eines vorschlagsgemäßen Schutzhelms,
- Fig. 2: eine schematische Schnittansicht des Schutzhelms der Fig. 1,
- Fig. 3: eine schematische Perspektivansicht eines zweiten Ausführungsbeispiels eines vorschlagsgemäßen Schutzhelms und
- Fig. 4: eine schematische Perspektivansicht eines dritten Ausführungsbeispiels eines vorschlagsgemäßen Schutzhelms.

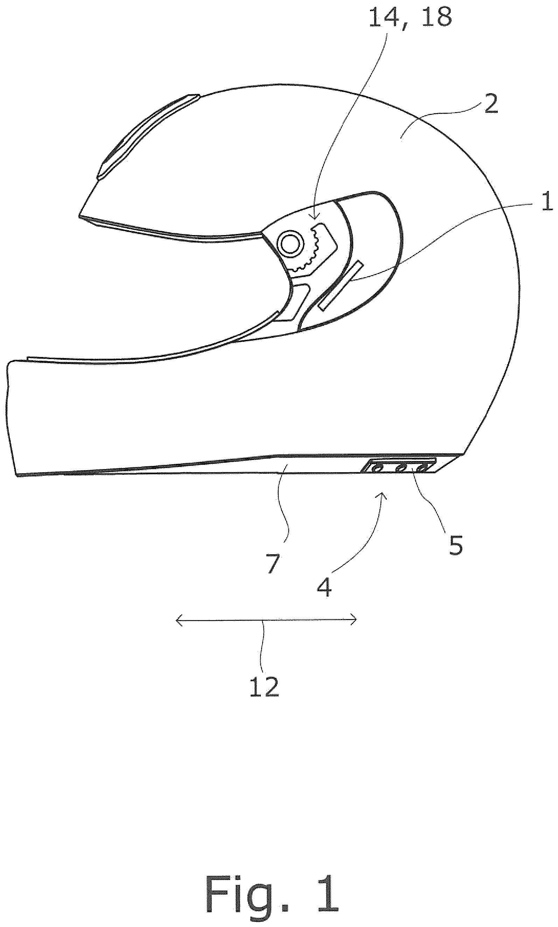

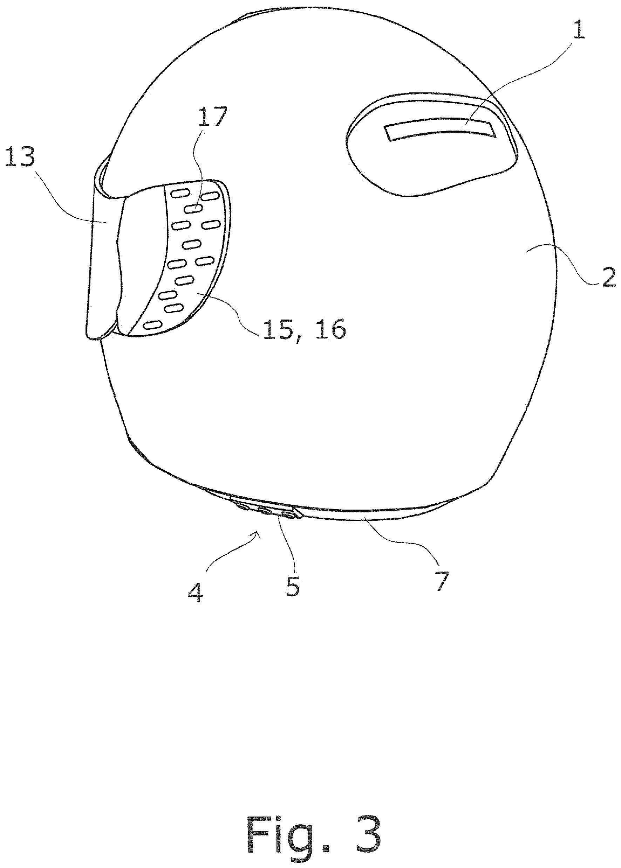

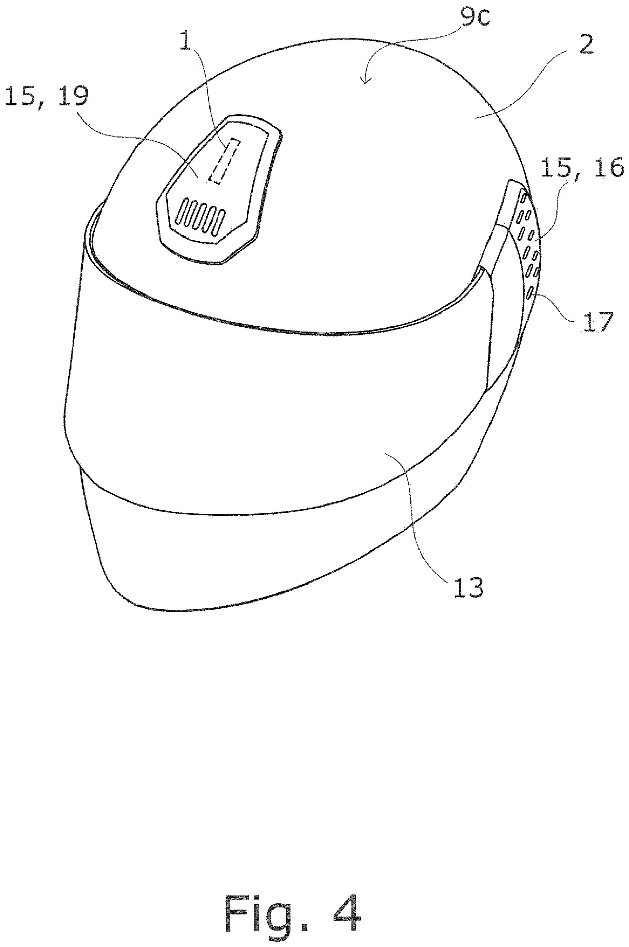

Bei den in den Fig. 1 bis 4 dargestellten insgesamt drei Ausführungsbeispielen von Schutzhelmen handelt es sich um Motorradschutzhelme. Sie weisen eine - jeweils unterschiedlich platzierte - Antenne 1 zur Funkübertragung, eine Außenschale 2 zur Verteilung von Aufprallkräften und eine unterhalb der Außenschale 2 - also Innen - angeordnete Innenschicht 3 zur Dämpfung von Aufprallkräften auf. Vorliegend besteht die Außenschale 2 aus Glasfaser mit einem zugesetzten Spezialharz und die Innenschicht 3 aus expandiertem Polystyrol (EPS). Nachfolgend wird jeweils zunächst das Ausführungsbeispiel der Fig. 1 beschrieben und - soweit Unterschiede bestehen - auf die Ausführungsbeispiele der Fig. 3 und der Flg. 4 gesondert eingegangen.

Ebenso weisen die dargestellten Schutzhelme jeweils einen Steckplatz 4 zur Kontaktierung einer Digitalvorrichtung 5 auf, bei welcher es sich um ein Bluetooth-Modul handelt, also um eine Vorrichtung zur Kommunikation in einem Bluetooth WPAN.

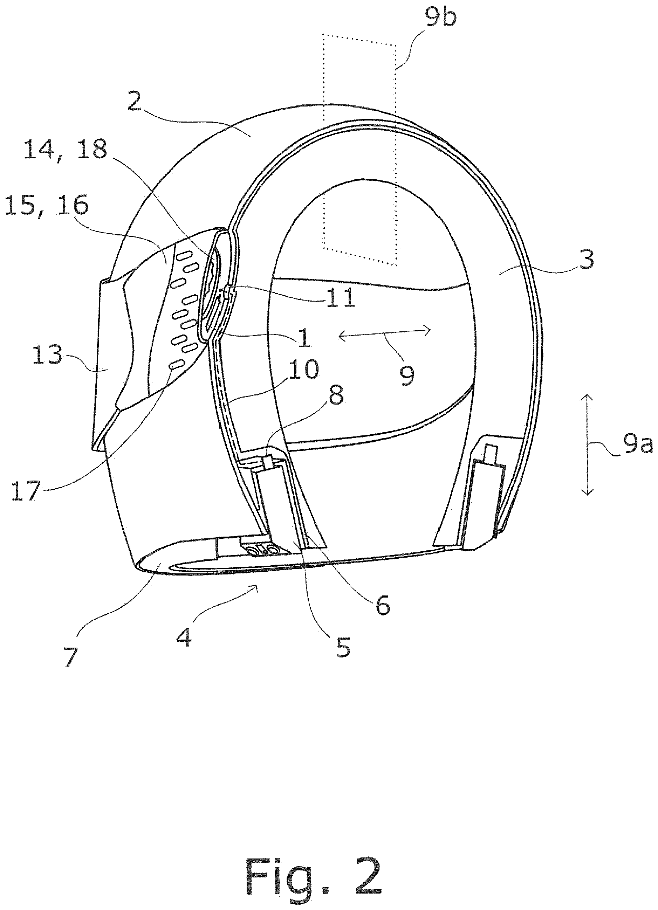

Bei dem ersten - Fig. 1 und 2 - sowie bei dem dritten - Fig. 4 - Ausführungsbeispiel Ist die Antenne 1 vollständig auf der Außenseite der Außenschale 2 angeordnet, sodass die Außenschale 2 vollumfänglich die jeweilige Antenne 1 von der Innenschicht 3 trennt. Im zweiten Ausführungsbeispiel der Fig. 3 hingegen Ist die Antenne 1 Innerhalb der Außenschale 2 angeordnet, sodass die Antenne 1 in allen Richtungen von der Außenschale 2 umgeben Ist.

Der Steckplatz 4 weist einen - In der Fig. 2 schematisch dargestellten - Rahmen 6 aus Kunststoff auf, welcher formschlüssig mit einem Helmabschluss 7 des Schutzhelms verbunden ist, der seinerseits den unteren Rand der Außenschale 2 abdeckt und mit der Außenschale 2 gekoppelt ist. Auf diese Weise ist der Rahmen 6 mittelbar fest mit der Außenschale 2 verbunden.

Ebenso weist der Steckplatz 4 eine - hier nur schematisch dargestellte - Koaxialsteckvorrichtung als Kontaktvorrichtung und Übertragungsvorrichtung 8 auf. Diese Übertragungsvorrichtung 8 dient der Kontaktierung eines Antennenkontakts der aufgenommenen Digitalvorrichtung 5 und ist mit einer Übertragungsleitung 10 elektrisch verbunden, über welche die Digitalvorrichtung 5 an die Antenne 1 angeschlossen wird. Auf diese Weise kann die Digitalvorrichtung 5 die Antenne 1 für Ihre Bluetooth-Übertragung nutzen.

Aus einer Zusammenschau der Fig. 1 und der Fig. 2 ergibt sich, dass in dem ersten Ausführungsbeispiel die Antenne 1 nicht nur seitlich, sondern sogar an einem äußeren - und speziell links äußeren - Querende des Schutzhelms angeordnet ist. Ebenso ist der Steckplatz 4 seitlich versetzt angeordnet. Die entsprechende Querrichtung 9 ist in der Fig. 2 und eine Längsrichtung 12 in der Fig. 1 dargestellt. Die Antenne 1 des Schutzhelms aus der Fig. 4 Ist hingegen in Querrichtung 9 mittig und dafür In einer - nur in der Fig. 2 dargestellten - Höhenrichtung 9a in einem Deckenbereich 9c des Schutzhelms angeordnet. Ebenso Ist in der Flg. 2 eine der obigen Längsrichtung 12 und der Höhenrichtung 9a entsprechende vertikale Mittellängsebene 9b wiedergegeben.

Die Übertragungsleltung 10 ist zwischen der Innenschicht 3 und der Außenschale 2 angeordnet und von der Übertragungsvorrichtung 8 zu einer Öffnung 11 in der Außenschale 2 geführt, durch die sie aus der Außenschale 2 heraustritt und dann die Antenne 1 kontaktiert. Der entsprechende Verlauf der Übertragungsleitung 10 sowie die Platzierung der Öffnung 11 Ist vorllegend nur für das erste Ausführungsbeispiel in der Fig.2 gezeigt.

Die dargestellten Schutzhelme weisen je ein - nur in der Ansicht der Fig. 1 nicht dargestelltes - Visier 13 und eine mit der Außenschale 2 befestigte Visierbefestigung 14 auf, an welcher das Visier 13 schwenkbar gelagert Ist. Ebenso ist mindestens eine Abdeckung 15 auf der Außenschale 2 angeordnet, wobei speziell das Ausführungsbeispiel der Fig. 4 zwei solche Abdeckungen 15 aufweist.

In den Ausführungsbeispielen der Fig. 1 und 2 sowie 4 ist die Antenne 1 vollständig zwischen einer solchen Abdeckung 15 und der Außenschale 2 angeordnet. Aus der Fig. 2 ist erkennbar, dass sich im ersten Ausführungsbeispiel auch die Öffnung 11 unter der Abdeckung 15 befindet.

Bei der - einzelnen - Abdeckung 15 des Ausführungsbelspiels der Fig. 1 und 2 sowie des Ausführungsbeispiels der Fig. 3 handelt es sich um eine Aerodynamikvorrichtung 16. Diese ist angrenzend zur Visierbefestigung 14 angeordnet - an welcher sie auch befestigt ist - und glättet den ansonsten durch das Visier 13 und die Vislerbefestigung 14 bedingten, schrofferen Oberflächenverlauf Im Bereich der Visierbefestigung 14. Die Aerodynamikvorrichtung 16 weist zudem Turbulatoren 17 zum Verringern der Geräuschentwicklung auf. Die Aerodynamikvorrichtung 16 Ist an der Visierbefestigung 14 befestigt, benutzt also deren Befestigung an der Außenschale 2 mit. Entsprechend handelt es sich beim ersten Ausführungsbeispiel bei der Visierbefestigung 14 um eine an sich zu einem konturierten Oberflächenverlauf führende Struktur 18 Im oben beschriebenen Sinne.

Hiervon abweichend handelt es sich bei der Abdeckung 15 des dritten Ausführungsbeispiels der Fig. 4 um eine verstellbare Zuführvorrichtung 19, mittels welcher Fahrtluft so umgelenkt werden kann, dass sie zwecks Kühlung durch - hier nicht dargestellte - Belüftungsöffnungen in der Außenschale 2 tritt.

## Patentansprüche

1. Schutzhelm, insbesondere Motorradschutzhelm, mit einer Antenne (1) zur Funkübertragung, mit einer Außenschale (2) zur Verteilung von Aufprallkräften, mit einer von der Außenschale (2) aufgenommenen Innenschicht (3) zur Dämpfung von Aufprallkräften, und mit einem mit der Außenschale (2) fest verbundenem Steckplatz (4) zur Kontaktierung einer Digitalvorrichtung (5) zur drahtlosen Kommunikation, wobei der Steckplatz (4) bei Kontaktierung der Digitalvorrichtung (5) diese mit der Antenne (1) für die drahtlose Kommunikation elektrisch verbindet wobei zwischen der Antenne (1) und der Innenschicht (3) zumindest eine Teilschicht der Außenschale (2) angeordnet ist, wobei der Schutzhelm eine Übertragungsleitung (10) zur elektrischen Verbindung der Digitalvorrichtung (5) mit der Antenne (1) aufweist und wobei die Übertragungsleitung (10) zumindest teilweise innenseitig zu der Außenschale (2) geführt ist, **dadurch gekennzeichnet, dass** der Steckplatz (4) an einem unteren Rand des Schutzhelms angeordnet ist.

2. Schutzhelm nach Anspruch 1, **dadurch gekennzeichnet, dass** die Antenne (1) außerhalb der Außenschale (2) angeordnet ist, vorzugsweise, dass die Antenne (1) im Wesentlichen zur Abstrahlung in einer horizontalen Senderichtung eingerichtet ist.

3. Schutzhelm nach Anspruch 1 oder 2, **dadurch gekennzeichnet, dass** die Digitalvorrichtung (5) ein Funkmodul für ein Wireless Personal Area Network (WPAN) ist, insbesondere, dass die Digitalvorrichtung (5) ein Funkmodul für Bluetooth ist.

4. Schutzhelm nach einem der Ansprüche 1 bis 3, **dadurch gekennzeichnet, dass** der Steckplatz (4) einen Rahmen (6) zur Aufnahme der Digitalvorrichtung (5) und eine mit der Antenne (1) elektrisch verbundene Übertragungsvorrichtung (8) zur Signalübertragung aufweist und dass bei Aufnahme der Digitalvorrichtung (5) in dem Rahmen (6) die Übertragungsvorrichtung (8) einen Antennenpol der Digitalvorrichtung (5) elektrisch konppelt.

5. Schutzhelm nach einem der Ansprüche 1 bis 4, **dadurch gekennzeichnet, dass** die Antenne (1) eine Dipolantenne ist, vorzugsweise, dass die Übertragungsvorrichtung (8) eine Koaxialsteckvorrichtung mit mindestens zwei Kontaktpolen ist.

6. Schutzhelm nach einem der Ansprüche 1 bis 5, **dadurch gekennzeichnet, dass** die Antenne (1) bezogen auf eine Querrichtung (9) des Schutzhelms im Wesentlichen an einem äußeren Querende des Schutzhelms angeordnet ist.

7. Schutzhelm nach einem der Ansprüche 1 bis 6, **dadurch gekennzeichnet, dass** die Übertragungsleitung (10) vollständig innenseitig zu der Außenschale (2) geführt ist.

8. Schutzhelm nach einem der Ansprüche 1 bis 7, **dadurch gekennzeichnet, dass** die Außenschale (2) eine Öffnung (11) aufweist und dass die Übertragungsleitung (10) für die elektrische Verbindung durch die Öffnung (11) geführt ist, vorzugsweise, dass die Übertragungsleitung (10) zumindest abschnittsweise zwischen der Außenschale (2) und der Innenschicht (3) geführt ist.

9. Schutzhelm nach einem der Ansprüche 1 bis 8, **dadurch gekennzeichnet, dass** der Steckplatz (4) seitlich versetzt zu einer Mittelebene in Längsrichtung (11) des Schutzhelms angeordnet ist, weiter insbesondere, dass die Öffnung (10) auf derselben Seitenhälfte der Außenschale (2) wie der Steckplatz (4) angeordnet ist.

10. Schutzhelm nach einem der Ansprüche 1 bis 9, **dadurch gekennzeichnet, dass** der Schutzhelm eine auf der Außenschale (2) angeordnete Abdeckung (15) aufweist und dass die Antenne (1) zumindest teilweise, vorzugsweise vollständig, zwischen der Außenschale (2) und der Abdeckung (15) angeordnet ist.

11. Schutzhelm nach Anspruch 10, **dadurch gekennzeichnet, dass** der Schutzhelm ein Visier (13) zum Augenschutz und eine fest mit der Außenschale (2) verbundene Visierbefestigung (14) zur schwenkbaren Lagerung des Visiers (13) aufweist, vorzugsweise, dass die Abdeckung (15) an die Visierbefestigung (14) angrenzend angeordnet ist, insbesondere, dass die Abdeckung (15) im Wesentlichen entgegen einer Sichtrichtung des Schutzhelms zu der Visierbefestigung (14) versetzt angeordnet ist.

12. Schutzhelm nach Anspruch 11, **dadurch gekennzeichnet, dass** die Abdeckung (15) an der Visierbefestigung (14) befestigt ist, vorzugsweise, dass die Öffnung (11) unter der Visierbefestigung (14) angeordnet ist, insbesondere, dass die Visierbefestigung (14) eine mit der Öffnung (11) fluchtende Durchbrechung zum Führen der Übertragungsleitung (10) durch die Öffnung (11) aufweist.

13. Schutzhelm nach einem der Ansprüche 10 bis 12, **dadurch gekennzeichnet, dass** die Abdeckung (15) eine vorzugsweise einstückig ausgebildete Aerodynamikvorrichtung (16) zum Beeinflussen der Luftströmung um den Schutzhelm bei Fahrt ist, insbesondere, dass die Abdeckung (15) Turbulatoren (17) zum Erzeugen von Luftverwirbelungen bei Fahrt aufweist.

14. Schutzhelm nach Anspruch 13, **dadurch gekennzeichnet, dass** der Schutzhelm eine an der Außenschale (2) angeordnete Struktur (18) aufweist, welche Struktur (18) gegenüber der Außenschale (2) zu einem konturierten Oberflächenverlauf des Schutzhelms führt und dass die Aerodynamikvorrichtung (16) so benachbart zu der Struktur (18) angeordnet ist, dass der durch die Aerodynamikvorrichtung (16) resultierende Oberflächenverlauf gegenüber dem konturierten Oberflächenverlauf geglättet ist.

15. Schutzhelm nach Anspruch 14, **dadurch gekennzeichnet, dass** die Außenschale (2), vorzugsweise in einem Deckenbereich (9c) des Schutzhelms angeordnete, Belüftungsöffnungen zur Zufuhr von Fahrtluft zur Kühlung in den Schutzhelm aufweist und dass die Abdeckung (15) eine die Belüftungsöffnungen abdeckende Zuführvorrichtung (19) zum Umlenken der Fahrtluft ist, vorzugsweise, dass die Zuführvorrichtung (19) zur variablen Zufuhr von Fahrtluft verstellbar ist.

## Claims

1. A protective helmet, in particular a protective motorcycle helmet, comprising an antenna (1) for radio transmission, an outer shell (2) for distributing impact forces, an inner layer (3), which is accommodated by the outer shell (2), for damping impact forces, and a socket (4), which is firmly connected to the outer shell (2), for contacting a digital device (5) for wireless communication, wherein the socket (4), when contacting the digital device (5), electrically connects the latter to the antenna (1) for wireless communication, wherein at least a partial layer of the outer shell (2) is disposed between the antenna (1) and the inner layer (3), wherein the protective helmet has a transmission line (10) for electrically connecting the digital device (5) to the antenna (1), and wherein the transmission line (10) is routed at least partially inside the outer shell (2), **characterized in that** the socket (4) is disposed at a lower edge of the protective helmet.

2. The protective helmet according to claim 1, **characterized in that** the antenna (1) is disposed outside the outer shell (2), preferably, that the antenna (1) is substantially configured for emitting in a horizontal transmission direction.

3. The protective helmet according to claim 1 or 2, **characterized in that** the digital device (5) is a radio module for a Wireless Personal Area Network (WPAN), in particular, that the digital device (5) is a radio module for Bluetooth.

4. The protective helmet according to any one of the claims 1 to 3, **characterized in that** the socket (4) has a frame (6) for accommodating the digital device (5) and a transmission device (8) for signal transmission, which is electrically connected to the antenna (1), and that, when the digital device (5) is accommodated in the frame (6), the transmission device (8) electrically couples an antenna pole of the digital device (5).

5. The protective helmet according to any one of the claims 1 to 4, **characterized in that** the antenna (1) is a dipole antenna, preferably, that the transmission device (8) is a coaxial plug-in device with at least two contact poles.

6. The protective helmet according to any one of the claims 1 to 5, **characterized in that** the antenna (1), with respect to a transverse direction (9) of the protective helmet, is disposed substantially at an outer transverse end of the protective helmet.

7. The protective helmet according to any one of the claims 1 to 6, **characterized in that** the transmission line (10) is routed completely inside the outer shell (2).

8. The protective helmet according to any one of the claims 1 to 7, **characterized in that** the outer shell (2) has an opening (11), and that the transmission line (10) for the electrical connection is routed through the opening (11), preferably, that the transmission line (10) is routed, at least in some portions, between the outer shell (2) and the inner layer (3).

9. The protective helmet according to any one of the claims 1 to 8, **characterized in that** the socket (4) is disposed laterally offset with respect to a center plane in the longitudinal direction (11) of the protective helmet, more particularly, that the opening (10) is disposed on the same side-half of the outer shell (2) as the socket (4).

10. The protective helmet according to any one of the claims 1 to 9, **characterized in that** the protective helmet has a cover (15) disposed on the outer shell (2), and that the antenna (1) is at least partially, preferably completely, disposed between the outer shell (2) and the cover (15).

11. The protective helmet according to claim 10, **characterized in that** the protective helmet has a visor (13) for eye protection and a visor attachment means (14), which is firmly connected to the outer shell (2), for pivotably mounting the visor (13), preferably, that the cover (15) is disposed adjacent to the visor attaching means (14), in particular, that the cover (15) is disposed substantially offset from the visor attaching means (14) in an opposite direction to the viewing direction of the protective helmet.

12. The protective helmet according to claim 11, **characterized in that** the cover (15) is attached to the visor attaching means (14), preferably, that the opening (11) is disposed underneath the visor attaching means (14), in particular, that the visor attaching means (14) has a through-hole aligned with the opening (11) for routing the transmission line (10) through the opening (11).

13. The protective helmet according to any one of the claims 10 to 12, **characterized in that** the cover (15) has a preferably integrally configured aerodynamics device (16) for influencing the air flow about the protective helmet during travel, in particular, that the cover (15) has turbulators (17) for generating air vortices during travel.

14. The protective helmet according to claim 13, **characterized in that** the protective helmet has a structure (18) disposed on the outer shell (2), which structure (18), compared to the outer shell (2), results in a contoured surface profile of the protective helmet, and that the aerodynamics device (16) is disposed adjacent to the structure (18) in such a manner that the surface profile resulting because of the aerodynamics device (16) is smoothed compared to the contoured surface profile.

15. The protective helmet according to claim 14, **characterized in that** the outer shell (2) has ventilation openings, preferably disposed in a ceiling region (9c) of the protective helmet, for feeding traveling air for cooling into the protective helmet, and that the cover (15) is a feeding device (19), which covers the ventilation openings, for diverting the traveling air, preferably, that the feeding device (19) is adjustable for a variable feed of traveling air.

## Revendications

1. Casque de protection, en particulier casque de protection de motocyclette, comprenant une antenne (1) pour la transmission radio, une coque extérieure (2) pour répartir les forces d'impact, une couche intérieure (3) logée par la coque extérieure (2) et destinée à amortir les forces d'impact, ainsi qu'un slot (4) qui est solidarisé à la coque extérieure (2) et destiné à mettre en contact un dispositif numérique (5) pour la communication sans fil, dans lequel ledit slot (4), lorsque le dispositif numérique (5) est mis en contact, connecte ce dernier électriquement à l'antenne (1) pour la communication sans fil, dans lequel au moins une couche partielle de la coque extérieure (2) est agencée entre l'antenne (1) et la couche intérieure (3), dans lequel ledit casque de protection comprend une ligne de transmission (10) pour la connexion électrique du dispositif numérique (5) à l'antenne (1) et dans lequel ladite ligne de transmission (10) est menée au moins en partie du côté intérieur par rapport à la coque extérieure (2), **caractérisé par le fait que** le slot (4) est agencé sur un bord inférieur du casque de protection.

2. Casque de protection selon la revendication 1, **caractérisé par le fait que** l'antenne (1) est disposée à l'extérieur de la coque extérieure (2), de préférence que l'antenne (1) est agencée pour l'essentiel pour émettre dans une direction d'émission horizontale.

3. Casque de protection selon la revendication 1 ou 2, **caractérisé par le fait que** le dispositif numérique (5) est un module radio pour un réseau personnel sans fil (WPAN), en particulier que le dispositif numérique (5) est un module radio pour Bluetooth.

4. Casque de protection selon l'une quelconque des revendications 1 à 3, **caractérisé par le fait que** le slot (4) présente un cadre (6) destiné à recevoir le dispositif numérique (5) ainsi qu'un dispositif de transmission (8) relié électriquement à l'antenne (1) et destiné à la transmission de signaux et que, lorsque le dispositif numérique (5) est reçu dans le cadre (6), le dispositif de transmission (8) couple électriquement un pôle d'antenne du dispositif numérique (5).

5. Casque de protection selon l'une quelconque des revendications 1 à 4, **caractérisé par le fait que** l'antenne (1) est une antenne dipôle, de préférence que le dispositif de transmission (8) est un dispositif mâle-femelle coaxial ayant au moins deux pôles de contact.

6. Casque de protection selon l'une quelconque des revendications 1 à 5, **caractérisé par le fait que**, par rapport à une direction transversale (9) du casque de protection, l'antenne (1) est disposée pour l'essentiel à une extrémité transversale extérieure du casque de protection.

7. Casque de protection selon l'une quelconque des revendications 1 à 6, **caractérisé par le fait que** la ligne de transmission (10) est guidée complètement du côté intérieur par rapport à la coque extérieure (2).

8. Casque de protection selon l'une quelconque des revendications 1 à 7, **caractérisé par le fait que** la coque extérieure (2) présente une ouverture (11) et que, pour la connexion électrique, la ligne de transmission (10) est menée à travers l'ouverture (11), de préférence que la ligne de transmission (10) est menée au moins par sections entre la coque extérieure (2) et la couche intérieure (3).

9. Casque de protection selon l'une quelconque des revendications 1 à 8, **caractérisé par le fait que** le slot (4) est disposé de manière latéralement décalée par rapport à un plan central dans la direction longitudinale (11) du casque de protection, encore en particulier que l'ouverture (10) est disposée sur la même moitié latérale de la coque extérieure (2) que le slot (4).

10. Casque de protection selon l'une quelconque des revendications 1 à 9, **caractérisé par le fait que** le casque de protection présente une couverture (15) disposée sur la coque extérieure (2) et que l'antenne (1) est disposée au moins en partie, de préférence complètement, entre la coque extérieure (2) et ladite couverture (15).

11. Casque de protection selon la revendication 10, **caractérisé par le fait que** le casque de protection présente une visière (13) pour la protection des yeux et une fixation de visière (14) solidarisée à la coque extérieure (2) et destinée à loger à pivotement la visière (13), de préférence que la couverture (15) est disposée de manière à être contiguë à la fixation de visière (14), en particulier que la couverture (15) est disposée de manière décalée par rapport à la fixation de visière (14) pour l'essentiel à rencontre d'une direction de vision du casque de protection.

12. Casque de protection selon la revendication 11, **caractérisé par le fait que** la couverture (15) est fixée sur la fixation de visière (14), de préférence que l'ouverture (11) est disposée sous la fixation de visière (14), en particulier que la fixation de visière (14) présente une percée alignée sur l'ouverture (11) et destiné à faire passer la ligne de transmission (10) à travers l'ouverture (11).

13. Casque de protection selon l'une quelconque des revendications 10 à 12, **caractérisé par** le fait la couverture (15) est un dispositif aérodynamique (16) réalisé de préférence en une seule pièce et destiné à influencer l'écoulement d'air autour du casque de protection lors de la conduite, en particulier que la couverture (15) présente des turbulateurs (17) pour générer des turbulences d'air lors de la conduite.

14. Casque de protection selon la revendication 13, **caractérisé par le fait que** le casque de protection présente une structure (18) disposée sur la coque extérieure (2), laquelle structure (18) conduit à un tracé de surface contouré du casque de protection par rapport à la coque extérieure (2) et que le dispositif aérodynamique (16) est disposé de manière voisine de la structure (18) de telle sorte que le tracé de surface résultant par le dispositif aérodynamique (16) est lissé par rapport au tracé de surface contouré.

15. Casque de protection selon la revendication 14, **caractérisé par le fait que** la coque extérieure (2) présente des ouvertures de ventilation disposées de préférence dans une zone supérieure (9c) du casque de protection et destinées à amener au casque de protection de l'air de déplacement pour le refroidissement, et que la couverture (15) est un dispositif d'alimentation (19) recouvrant les ouvertures de ventilation et destiné à dévier l'air de déplacement, de préférence que le dispositif d'alimentation (19) est réglable pour l'alimentation variable en air de déplacement.
